# DEMANDE DE BREVET EUROPEEN

(11) **EP 1 153 892 A1**
(43) Date de publication de la demande: **14.11.2001**
(21) Numéro de dépôt: 00870099.9
(22) Date de dépôt: 08.05.2000
(51) Int. Cl.: C02F 3/34, C11D 3/38

(54) **Produit de nettoyage contenant des enzymes**

(71) Demandeur: Realco 2001 S.A./N.V., 1348 Louvain-la-Neuve (BE)
(72) Inventeur: Ledent, Philippe, 4000 Liège (BE); Debois, Valérie, 5310 Dhuy (BE); Czochara, Magali, 87330 Mezière sur Issoire (FR); Blackman, Gordon, 1380 Lasne (BE)
(74) Mandataire: Van Malderen, Joelle

(57) **Abrégé**

La présente invention se rapporte à un produit de nettoyage comprenant un mélange d'enzymes et également d'autres constituants susceptibles de traiter les matières organiques présentes dans les eaux usées dans lesquelles le produit de nettoyage est rejeté, caractérisé en ce que la concentration dudit mélange d'enzymes dans le produit de nettoyage est comprise entre 3 et 10% en poids par rapport au poids total du produit de nettoyage, de manière à augmenter la cinétique de métabolisation de matières organiques par des micro-organismes présents dans toutes eaux usées dans lesquelles le produit de nettoyage est rejeté.

## Description

### Objet de l'invention

La présente invention se rapporte à un produit de nettoyage susceptible également de traiter les matières organiques présentes dans les eaux usées où il est rejeté.

### Etat de la technique

Un grand nombre de documents décrivent que des enzymes facilitent la dégradation des matières organiques présentes dans les eaux usées.

Le document US-6020293 décrit la composition d'un détergent spécifique aux égouts contenant une cellulase. Ce détergent peut alors être utilisé soit pour le nettoyage d'égouts, soit pour détruire ou empêcher les dépôts de cellulose en milieu aqueux.

Le document WO-9855406 décrit un produit biologique contenant au moins un type d'enzymes pour hydrolyser des substances organiques. Ainsi, ce produit permet d'entretenir les canalisations d'eau et d'épurer les eaux usées. Il est proposé sous forme de bâtonnets qui sont placés dans les siphons de salles de bains ou de cuisines, mais aussi dans les fosses septiques et des bacs à graisse.

Plus spécifiquement, le document US-5071765 décrit l'application d'un mélange de plusieurs enzymes pour attaquer et enlever le biofilm bactérien et entretenir les surfaces présentes dans des installations telles que des tours de refroidissement, mais aussi dans les filières de traitement des eaux usées et dans les papeteries.

Le document EP-0590746 décrit une méthode pour inhiber la formation d'un biofilm ou le retirer des surfaces en contact avec un milieu aqueux. Cette méthode consiste essentiellement en l'ajout au milieu aqueux de protéases, éventuellement combinées avec d'autres enzymes et/ou des détergents.

La demande de brevet WO99/20571 décrit un procédé pour supprimer l'effet des détergents sur la germination et ou la croissance des micro-organismes présents dans un milieu aqueux, dans lequel on ajoute une quantité suffisante de une ou plusieurs enzymes audit milieu aqueux comprenant lesdits micro-organismes, ces enzymes pouvant être des protéases, des cellulases, des α-amylases, des lipases ou un mélange d'entre elles.

Le document US-5443656 décrit un produit qui dégrade les matériaux fibreux et qui contient des cellulases, dont l'activité est augmentée par l'ajout de bicarbonate de sodium et d'acide citrique.

De plus, les enzymes sont connues depuis longtemps pour leur utilité dans les produits de nettoyage. Les additifs enzymatiques de détergents les plus fréquemment rencontrés sont des protéases, des amylases, des cellulases et des lipases présentes à de faibles concentrations par rapport aux autres constituants des produits de nettoyage (EP-0214761, EP-0258068, US-4011169,...).

Le document US-4842758 décrit l'utilisation d'une enzyme stabilisée dans la composition d'un détergent. Elle lui fournit ainsi une activité nettoyante protéolytique et amylolytique.

Le document EP-0373850 décrit la composition d'un détergent contenant des enzymes et disponible sous la forme de poudre, de granulés, sous forme liquide, sous forme d'une pâte ou d'une brique. Il contient des lipases pour une quantité de 50 à 30 000 LU (Lipase Unit) par gramme de détergent.

Cependant, aucun de ces documents de l'état de la technique ne décrit le fait que les enzymes utilisées dans les produits de nettoyage conservent au moins une partie de leur activité pour dégrader des macromolécules lorsqu'elles sont rejetées dans les eaux usées.

### Buts de l'invention

La présente invention vise à fournir un produit de nettoyage contenant un mélange d'enzymes qui permettent non seulement d'optimiser le nettoyage mais également d'avoir un effet positif sur l'environnement, en particulier qui permettent de faciliter le traitabilité des eaux usées préalablement à leur traitement dans une station d'épuration.

En effet, la présence d'enzymes dans les eaux usées après le cycle de lavage permet une meilleure traitabilité des eaux de rejet, c'est à dire une augmentation de la cinétique de métabolisation des matières organiques par les micro-organismes présents dans les boues activées de stations d'épuration.

En d'autres termes, la présente invention vise à fournir un produit de nettoyage qui permet une amélioration de la qualité des eaux usées dans lesquelles il est rejeté.

### Résumé de l'invention

La présente invention est relative à un produit de nettoyage susceptible de traiter les matières organiques présentes dans les eaux, en particulier les eaux usées issues d'un lavage par ce produit de nettoyage, caractérisé en ce que le produit de nettoyage comprend un mélange d'enzymes présentes à une concentration supérieure à 3% en poids par rapport aux autres constituants du produit de nettoyage.

De préférence, on entend par eaux usées, les eaux dans lesquelles le produit de nettoyage est rejeté après avoir été collecté et dilué dans les réseaux d'égouttage avant leur traitement dans une station d'épuration comprenant des micro-organismes susceptibles de traiter lesdites eaux usées, en particulier les matières organiques présentes dans ces eaux usées, l'objet de l'invention visant donc à fournir un produit de nettoyage facilitant ce traitement des matières organiques présentes dans les eaux usées préalablement à leur dégradation finale par des micro-organismes présents dans les réseaux d'égouttage et les stations d'épuration.

Le mélange d'enzymes présentes dans le produit de nettoyage de l'invention est un mélange de une ou plusieurs amylases, de une ou plusieurs protéases et/ou de une ou plusieurs lipases, de préférence issues de micro-organismes différents, ou un mélange de toutes autres hydrolases.

Selon l'invention, les micro-organismes sont choisis parmi le groupe constitué par les micro-organismes suivants : *Aspergillus niger, Aspergillus oryzae, Bacillus subtilus, Bacillus licheniformis et Rhizomucor.*

Le produit de nettoyage selon l'invention peut être tout type de produit de nettoyage de type vaisselle ou de type lessive, présent sous forme solide (en tablettes), en poudre ou sous forme liquide.

Le produit de nettoyage de l'invention comprend un mélange d'enzymes présentes à une concentration supérieure à 3% en poids et de préférence inférieure à 10% en poids par rapport aux autres constituants du produit de nettoyage, c'est-à-dire les détergents ou surfactants, les agents blanchissants,... pour assurer un traitement efficace des matières organiques présentes dans les eaux usées.

De manière optimale, cette concentration a été établie comme étant de l'ordre de 5% en poids (w:w) par rapport à la totalité des constituants du produit de nettoyage, cette concentration efficace étant également celle définie par rapport à la quantité ou à la charge de matières organiques à traiter dans les eaux usées suite à leur dilution dans les eaux usées présentes dans une station d'épuration ou suite à une éventuelle dilution des eaux usées par les réseaux d'égouttage.

Cette concentration efficace et son effet bénéfique sur l'environnement n'avait encore jamais été décrite dans les documents de l'état de la technique pour obtenir un traitement efficace des matières organiques avant leur consommation par les micro-organismes présents dans les réseaux d'égouttage ou dans les stations d'épuration.

Un dernier aspect de la présente invention concerne donc l'utilisation du produit de nettoyage selon l'invention, de manière à augmenter la cinétique de métabolisation des matières organiques par des micro-organismes présents dans toutes eaux usées, et dans lesquelles le produit de nettoyage de l'invention est rejeté en particulier dans les réseaux d'égouttage et dans les stations d'épuration vers lesquelles lesdites eaux usées sont évacuées.

Le présente invention sera décrite en détail dans les figures annexées en référence à l'exemple d'exécution ci-dessous.

### Brève description des figures

La figure 1 représente le suivi au cours du temps de la densité bactérienne dans des milieux de culture constitués de substrats polymériques (A et P) et monomériques (G et AA).

La figure 2 représente le suivi au cours du temps de la densité bactérienne dans des milieux où sont testés différents "cocktails" enzymatiques.

La figure 3 représente le suivi au cours du temps de la consommation d'oxygène dans des milieux contenant un détergent enrichi en enzymes ou non.

La figure 4 représente le suivi au cours du temps de la consommation d'oxygène dans des milieux contenant un détergent enrichi en enzymes, incubées ou non, à 65 °C.

### Description détaillée de l'invention

La présente invention provient de plusieurs observations faites par les inventeurs lors de manipulations diverses.

les inventeurs ont identifié que l'étape limitante dans l'assimilation des matières organiques par les micro-organismes présents dans les boues activées de stations d'épuration est l'hydrolyse des macromolécules.

En particulier, l'hydrolyse des protéines présente un caractère plus limitant que celui observé pour d'autres macromolécules telles que l'amidon.

Ces observations ont conduit à la préparation d'un cocktail de différentes enzymes, en particulier de différentes hydrolases et de protéases dans le traitement des eaux usées, via notamment leur ajout dans des produits de nettoyage.

En effet, l'ajout d'enzymes dans des eaux usées augmente de manière inattendue la cinétique de métabolisation des matières organiques par des micro-organismes et donc la traitabilité de l'eau à épurer (facilité de traitement des eaux usées de manière plus rapide et à moindre coût par des stations d'épuration directement dans les réseaux d'égouttage ou dans des stations d'épuration de plus petite taille).

Les inventeurs ont également observé que de manière inattendue des enzymes présentes dans un produit de nettoyage conservent leur activité, même lorsqu'elles sont traitées à des températures élevées, en particulier une température de 65°C pendant une heure n'altère par l'effet de l'enzyme sur le traitabilité de l'eau usée, et que un mélange d'enzymes était caractérisé par un effet synergique plus efficace que l'utilisation de la même quantité d'une seule enzyme.

Par conséquent, l'incorporation d'un mélange d'enzymes à une concentration plus importante que celle présente dans les produits de nettoyage déjà commercialisés permet de manière inattendue de faciliter la traitabilité des eaux usées à épurer en provoquant une augmentation de la cinétique de métabolisation de la matière organique par des micro-organismes par l'action enzymatique dudit mélange ou cocktail d'enzymes préalablement incorporés dans le produit de nettoyage.

Dans le but de développer une pastille "lave-vaisselle" (produit de nettoyage efficace) contenant lesdites enzymes, les inventeurs ont préalablement étudié les performances de dégradation de la matière organique par différents types de cocktails enzymatiques et ont ensuite étudié la persistance de leur activité après une incubation à 65°C lorsque lesdits cocktails d'enzymes sont introduits dans ladite pastille "lave-vaisselle" de l'invention, comme cela est illustré dans les exemples ci-dessous.

### Exemples

### Matériel et méthodes

### Micro-organismes

Ils proviennent des boues activées prélevées dans l'aérateur d'une station d'épuration. Ces boues ont été prélevées à Marbais (Belgique), station gérée par l'Intercommunale du Brabant Wallon (IBW).

### Enzymes

Selon l'invention, les enzymes commerciales suivantes ont été utilisées :
- quatre amylases produites par *Aspergillus niger, Aspergillus oryzae*, *Bacillus subtilis* et *Bacillus licheniformis,*
- cinq protéases produites par *Bacillus subtilis, Bacillus licheniformis, Aspergillus oryzae* et *Rhizomucor,* et
- une lipase produite par *Aspergillus oryzae.*

### Surfactants

Le produit "lave-vaisselle" en pastille de l'invention est un exemple de produit de nettoyage selon l'invention comprenant des concentrations en surfactant de 19 g/kg. Le surfactant non ionique utilisé pour ce produit est le Plurafac LF 400 (BASF, Allemagne).

### Milieux et conditions de culture

Les milieux de culture, qui permettent d'évaluer la traitabilité de la matière organique, sont des substrats monomériques (glucose et casaminoacides) ou polymériques (Sérum Albumine Bovine (BSA) et amidon). La BSA, l'amidon et le glucose proviennent de Sigma Chemical Co (St Louis, MO, USA) et les casaminoacides proviennent de Difco (Detroit, MI, USA).

L'inoculation dans ces milieux de culture s'est faite de deux manières différentes : soit dans des flacons coniques de 500 ml qui contiennent 250 ml de milieu et sont agités à la vitesse de 150 rpm à température ambiante, soit directement dans les bouteilles de mesure de la DBO₅ à température ambiante (20 +/- 1 °C).

Le suivi au cours du temps de la croissance bactérienne a été effectué par mesure de la turbidité (D.O. à 600 nm) ou par respirométrie.

### Demande biologique en oxygène

La Demande Biologique en Oxygène (DBO₅) a été déterminée à l'aide des bouteilles OxiTop de WTW, qui adaptent la norme DINEN 1899 part 2: 1846F.

### Concentration en surfactant

La concentration en surfactant non ionique dans les milieux de culture utilisés est de 16 ppm de détergent et une consommation de 12 litres d'eau pour un cycle de lavage. Cette valeur a été calculée en se basant sur l'usage d'une seule pastille de produit de nettoyage.

### Concentration en enzymes

La concentration en enzymes utilisées dans le produit de nettoyage (pastille) dans le milieu de culture utilisé, est de 4% par rapport à la charge en matières organiques présentes dans les eaux usées.

### Résultats

### Caractère limitant de l'hydrolyse des protéines

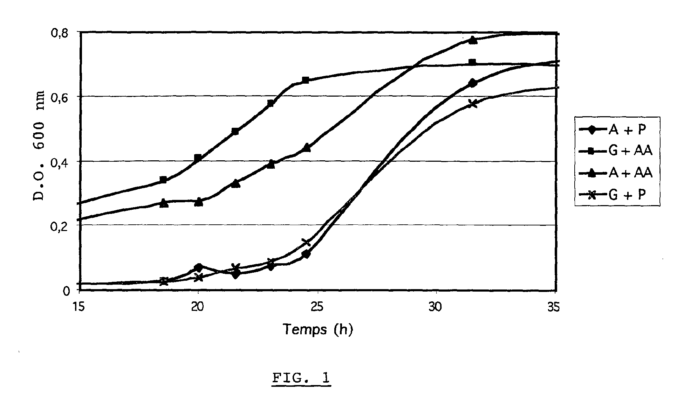

Quatre milieux différents présentant des substrats monomériques et/ou polymériques sont testés. La figure 1 montre le suivi au cours de temps de la croissance bactérienne (boues de station d'épuration) en fonction de la nature des substrats.
- Milieu glucose + acides aminés/milieu amidon + protéine: dix heures de latence supplémentaires sont nécessaires pour hydrolyser les substrats polymériques. On peut donc conclure que l'hydrolyse des macromolécules par les enzymes sécrétées par les micro-organismes constitue l'étape limitante du processus global d'assimilation.
- Milieu glucose + acides aminés/glucose + protéine: une phase de latence plus longue de près de dix heures est observée lorsque les acides aminés sont remplacés par la protéine; l'hydrolyse de la protéine est donc limitante.
- Milieu glucose + acides aminés/amidon + acides aminés: une phase de latence plus longue est observée lorsque le glucose est remplacé par l'amidon. L'allongement de cette phase est cependant moins important comparativement à celui mesuré pour le remplacement acides aminés / protéine; l'hydrolyse de l'amidon constitue donc bien une étape limitante, même si le caractère limitant est moins marqué dans ce cas.

L'hydrolyse extracellulaire des macromolécules en unités plus petites constitue donc l'étape limitante du phénomène global d'assimilation des matières organiques par les micro-organismes des boues activées de stations d'épuration. L'hydrolyse des protéines présente un caractère plus limitant que celui observé pour l'amidon.

### Spécificité et concentration en protéases

Différents types et mélanges de protéases, qui présentent des activités endo- et exo-peptidases différentes ont été testés. Le taux spécifique de croissance *µ* des micro-organismes ainsi que la durée de la phase de latence ont été calculés par ajustement paramétrique des différentes courbes (voir tableau 1).

**Tableau 1**

| | ***µ* (h**^{**-1**}**)** | **Temps de latence (h)** |
|---|---|---|
| G + AA | 0,65 | 16 |
| G + P | 0,49 | 21 |
| G + P + E1 | 0,512 | 19 |
| G + P + E2 | 0,510 | 18,7 |
| G + P + E1 + E2 | 0,48 | 18,8 |
| G + P + E1 + E2 + E3 | 0,59 | 18 |
| G + P + E1 + E2 + E3 + E4 | 0,547 | 17,4 |

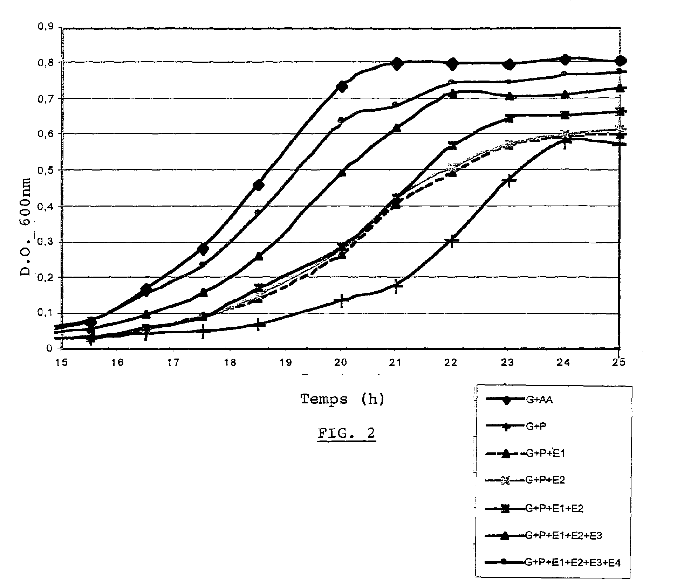

La figure 2 montre l'évolution de la densité microbienne au cours du temps, estimée par la mesure de la D.O. à 600 nm.
- Milieu Glucose + Acides Aminés/Glucose + Protéine: on confirme, avec des boues activées issues d'une station d'épuration des eaux usées domestiques, que l'hydrolyse des protéines est limitante. En présence de protéines, la phase de latence est plus longue de 5 heures tandis que le taux spécifique de croissance est réduit de 25%.
- Glucose + Protéine/(Glucose + Protéine + E1/Glucose + Protéine + E2/Glucose + Protéine + E1 + E2): on constate une réduction de la phase de latence de +/- 2 heures.
- Glucose + Protéine/Glucose + Protéine + E1 + E2 + E3: on constate une réduction de la phase de latence de 3 heures.
- Glucose + Protéine/Glucose + Protéine + E1 + E2 + E3 + E4: on constate une réduction de la phase de latence de 3,6 heures et augmentation du taux spécifique de croissance d'environ 30%, la courbe se superposant presque à celle obtenue pour le milieu Glucose + Acides Aminés ne contenant que des monomères.

Ces résultats confirment donc le caractère limitant que constitue l'étape d'hydrolyse des protéines. On peut de plus conclure que l'ajout d'un "mélange" de différentes protéases permet de lever cette étape limitante. D'autres résultats, non présentés dans ce rapport, montrent que l'effet positif des protéases sur la levée de l'étape limitante dépend non seulement de la spécificité des enzymes utilisées (nécessité d'utiliser un "mélange" de différentes protéases) mais également de leur concentration.

Le fait que l'hydrolyse des macromolécules, une des caractéristiques des eaux usées domestiques, constitue l'étape limitante de la croissance des micro-organismes des boues activées confirme le traitement des eaux usées via, par exemple, leur ajout dans les produits d'entretien.

### Effet positif des enzymes dans un produit de nettoyage

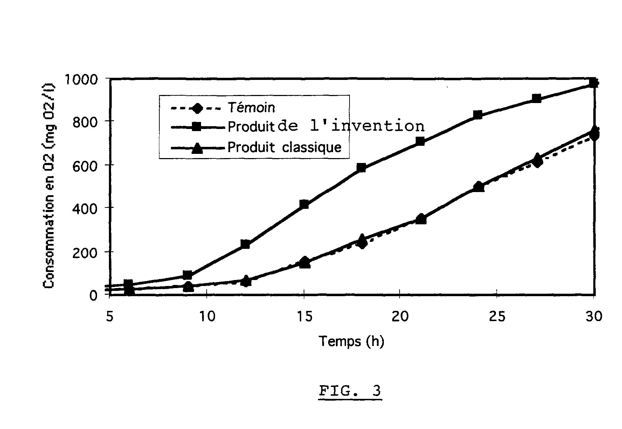

L'expérience décrite ci-après concerne un produit "lave-vaisselle". Elle montre l'intérêt d'utiliser des quantités d'enzymes plus importantes par rapport à celles présentes dans les produits détergents "classiques". La figure 3 montre l'évolution de la croissance des boues activées dans un milieu macromoléculaire et permet d'évaluer l'effet de l'addition d'enzymes dans un produit "lave-vaisselle". Trois produits ont été testés: (i) le témoin correspondant à un détergent sans enzyme, (ii) le produit classique correspondant à un détergent avec la dose en enzymes telle que commercialisée actuellement et (iii) le produit détergent de l'invention avec un enrichissement en enzymes.

On constate que le produit de l'invention, comparativement au témoin et au produit classique, augmente la vitesse de croissance des micro-organismes. Les deux composantes - chimique et biologique - du produit assurent une efficacité de nettoyage tout en améliorant de façon significative la cinétique de métabolisation des matières organiques présentes dans le milieu ou, autrement dit, en augmentant la traitabilité de l'eau usée à épurer.

C'est en augmentant la traitabilité que les enzymes ajoutées aux produits de nettoyage améliorent les processus naturels d'épuration.

### Activité enzymatique après un cycle de lavage

Trois produits ont été testés: (i) le détergent sans enzyme, (ii) le détergent avec la dose en enzymes telle que commercialisée actuellement et (iii) le détergent avec un enrichissement en enzymes. Les essais sont faits en double.

L'effet des 3 produits sur la traitabilité a été testé dans des conditions différentes: (i) sans incubation préalable, et (ii) avec une incubation de une heure à 65 °C, conditions simulant un cycle de lavage.

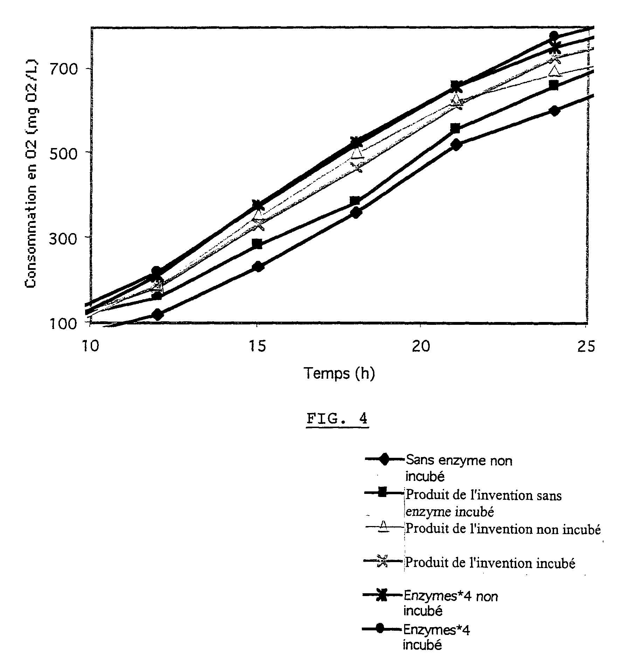

La figure 4 montre que l'incubation à 65 °C n'influence pas l'activité enzymatique. L'activité du cocktail enzymatique selon l'invention tel qu'employé est toujours opérante après une incubation d'une heure à une température de 65°C; elle est toujours capable d'améliorer la traitabilité de l'eau usée à épurer.

## Revendications

1. Produit de nettoyage comprenant un mélange d'enzymes et également d'autres constituants susceptibles de traiter les matières organiques présentes dans les eaux usées dans lesquelles le produit de nettoyage est rejeté, **caractérisé en ce que** la concentration dudit mélange d'enzymes dans le produit de nettoyage est comprise entre 3 et 10% en poids par rapport au poids total du produit de nettoyage.

2. Produit de nettoyage selon la revendication 1, **caractérisé en ce que** la concentration dudit mélange d'enzymes est de l'ordre de 5% en poids par rapport au poids total du produit de nettoyage.

3. Produit de nettoyage selon la revendication 1 ou 2, **caractérisé en ce que** le poids des autres constituants est diminué de 3% au moins par rapport à celui d'un produit de nettoyage selon l'état de la technique qui présente les mêmes performances de nettoyage que ledit produit.

4. Produit de nettoyage selon l'une quelconque des revendications 1 à 3, **caractérisé en ce que** le mélange d'enzymes est un mélange d'hydrolases.

5. Produit de nettoyage selon la revendication 4, **caractérisé en ce que** le mélange d'hydrolases est un mélange de une ou plusieurs amylases, de une ou plusieurs protéases et/ou de une ou plusieurs lipases.

6. Produit de nettoyage selon l'une quelconque des revendications précédentes, **caractérisé en ce que** les enzymes sont issues de micro-organismes différents.

7. Produit de nettoyage selon la revendication 6, **caractérisé en ce que** les enzymes sont produites par un ou plusieurs micro-organismes choisis parmi le groupe constitué par *Aspergillus niger, Aspergillus oryzae, Bacillus subtilis*, *Bacillus licheniformis et Rhizomucor.*

8. Produit de nettoyage selon l'une quelconque des revendications précédentes, **caractérisé en ce qu'**il se présente sous forme solide en tablettes, en poudre ou sous forme liquide.

9. Produit de nettoyage selon l'une quelconque des revendications précédentes, **caractérisé en ce qu'**il est un produit de nettoyage vaisselle ou un produit de nettoyage lessive.

10. Utilisation du produit de nettoyage selon l'une quelconque des revendications précédentes, pour le nettoyage de vaisselles ou de lessives.

11. Utilisation du produit de nettoyage selon l'une quelconque des revendications précédentes, pour augmenter la cinétique de métabolisation de matières organiques par les micro-organismes présents dans toutes eaux usées, dans lesquelles le produit de nettoyage est rejeté.
